(19) Europäisches Patentamt
European Patent Office
Office européen des brevets

(11) **EP 4 769 901 A2**

(12) **EUROPÄISCHE PATENTANMELDUNG**

(43) Veröffentlichungstag:
01.07.2026 Patentblatt 2026/27

(51) Internationale Patentklassifikation (IPC):
*H02K 1/00* (2006.01)

(21) Anmeldenummer: 26170634.5

(22) Anmeldetag: 17.12.2025

(52) Gemeinsame Patentklassifikation (CPC):
**H02K 1/2773; H01F 1/10; H02K 1/28; H02K 21/14;**
H02K 1/02; H02K 2213/03

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **19.12.2024 DE 102024138898**

(62) Dokumentnummer(n) der früheren Anmeldung(en)
nach Art. 76 EPÜ:
**25224181.5 / 4 765 587**

(71) Anmelder: **Ziehl-Abegg SE
74653 Künzelsau (DE)**

(72) Erfinder:
• **Diemer, Lukas
74747 Ballenberg (DE)**
• **Peters, Michael
74613 Öhringen (DE)**

(74) Vertreter: **Maucher Jenkins
Patent- und Rechtsanwälte
Urachstraße 23
79102 Freiburg im Breisgau (DE)**

Bemerkungen:
Diese Anmeldung ist am 02-04-2026 als
Teilanmeldung zu der unter INID-Code 62 erwähnten
Anmeldung eingereicht worden.

(54) **ELEKTRISCHER ANTRIEBSMOTOR, INSBESONDERE ZUR VERWENDUNG ALS HUBMOTOR
FÜR EINE AUFZUGSANLAGE**

(57) Zur Erhöhung der elektrischen Effizienz aber auch zur Ermöglichung einer kostengünstigen und zuverlässigen Fertigung wird ein optimiertes Speichen-Design für einen Rotor (3) eines elektrischen Antriebsmotors (1) vorgeschlagen, sodass insbesondere Permanentmagnete (5) auf Basis von Ferriten eingesetzt werden können. Das Rotor-Design zeichnet sich durch besonders filigran ausgestaltete Speichen (7) aus, die es ermöglichen, den magnetischen Fluss zu vergrößern und so insbesondere beim Anfahren des Motors (1) hohe Drehmomente zu erzeugen, wie es bei dem beabsichtigten Einsatz des Antriebsmotors (1) als Hubmotor einer Aufzugsanlage benötigt wird (vgl. Figur 1).

Fig. 1

EP 4 769 901 A2

**Beschreibung**

Die Erfindung betrifft einen elektrischen Antriebsmotor, der insbesondere als Hubmotor für eine Aufzugsanlage eingesetzt werden kann (und somit ein Mindest-Drehmoment von 50 Nm liefern kann). Der Antriebsmotor/Hubmotor umfasst einen Stator, der eine (vorzugsweise dreiphasige Statorwicklung) zur Erzeugung eines magnetischen Drehfelds aufweist, wobei die Statorwicklung in Nuten des Stators eingelegt ist. Die Statorwicklung kann dabei als Zahnspulen-Wicklung oder aber als verteilte Wicklung ausgestaltet sein und/oder insbesondere dafür ausgelegt sein, den Antriebsmotor mit einem dreiphasigen elektrischen Antriebsstrom zu betreiben. Ferner weist der Antriebsmotor einen um eine Rotationsachse drehbar gelagerten Rotor auf, der eine Vielzahl an Permanentmagneten trägt. Hierbei ist der Rotor als Innen-läufer ausgestaltet und die besagte Rotationsachse (z-Achse) definiert eine Radialrichtung R in einer xy-Radial-ebene, welche senkrecht zur Rotationsachse verläuft. Die Permanentmagnete erstrecken sich dabei überwiegend in der Radialrichtung R und der Rotor bildet entlang der Radialrichtung R verlaufende Speichen aus, die jeweils, in einer Umfangsrichtung des Rotors, Magnettaschen begrenzen, in welche die Permanentmagnete eingesetzt sind.

Der Stator des Antriebsmotors kann eine Anzahl $PZ_S$ an magnetischen Polen von $PZ_S = 2p_S$ ausbildet, mit $p_S$ der Anzahl an Polpaaren des Stators, die sich bei entsprechender Bestromung ausbilden. Zur elektromagnetischen Erzeugung der Polpaare weist der Stator eine Anzahl $N_N$ an Nuten auf. Der durch die Statorwicklung erzeugte magnetische Fluss kann dabei zumindest teilweise durch (insbesondere zahnförmige) Magnetflussleiter des Stators geführt sein.

Derartige Antriebsmotoren sind in Form von Aufzugsmotoren grundsätzlich vorbekannt und werden häufig als elektrische Permanentmagnet-Synchron-maschinen (PMSM) ausgestaltet. Für den Einsatz als Hubmotor einer Aufzugsanlage ist dabei entscheidend, dass der Antriebsmotor über einen weiten Temperaturbereich hinweg stets ein ausreichendes Drehmoment (von typischerweise mindestens 50 NM) beim Anfahren des Motors, also bei geringen Rotationsgeschwindigkeiten des Rotors, zuverlässig erzeugen kann, um eine Aufzugskabine der Aufzugsanlage ohne Ruckeln und ohne störende Geräuschentwicklung (etwa aufgrund von Vibrationen) in Bewegung zu versetzen.

Im Stand der Technik dominieren derzeit Hubmotoren, die Permanentmagnete aufweisen, die auf einer Eisenlegierung basieren, die auch seltene Erden umfasst, insbesondere das Element Neodym. Die weltweiten Ressourcen von seltenen Erden sind jedoch begrenzt, sodass grundsätzlich ein Wunsch besteht, leistungsfähige Aufzugsmotoren zu entwerfen mit Permanentmagneten, die keine seltenen Erden umfassen.

Ferner sind auch wie eingangs beschriebene Speichen-Designs von Rotoren eines Elektromotors, bei welchem Design die Permanentmagnete nicht mehr an der Außenseite des Rotors, also im Luftspalt zwischen Rotor und Stator angeordnet sind, sondern jeweils radialförmig innerhalb des Rotors, genauer in jeweiligen Taschen des Rotors, grundsätzlich vorbekannt.

Von diesem vorbekannten Stand der Technik ausgehend liegt der Erfindung die Aufgabe zugrunde, einen leistungsfähigen Antriebsmotor zum Einsatz als Hubmotor für eine Aufzugsanlage bereitzustellen, wobei der Antriebsmotor preiswert und reproduzierbar herstellbar sein soll und zudem eine hohe elektrische Effizienz aufweisen soll.

Zur Lösung dieser Aufgabe sind erfindungsgemäß bei einem Antriebsmotor die Merkmale von Anspruch 1 vorgesehen. Dieser Antriebsmotor kann als eine elektrische Permanentmagnet-Synchronmaschine (PMSM) ausgestaltet sein. Mit Hilfe eines geeigneten Frequenzumrichters kann der Antriebsmotor somit mit Wechselspannung betrieben werden.

Hierbei ist es zur Maximierung des Magnetflusses bevorzugt, wenn die Magnettaschen vollständig mit dem magnetischen Material der Permanentmagnete gefüllt sind (also gerade nicht mit einem nicht-magnetischen Material wie Luft oder zumindest teilweise mit einem nicht-magnetischen Spacer, wie dies bei vorbekannten Designs oftmals der Fall ist).

Entlang des Außenumfangs des Rotors können jeweilige Öffnungen zwischen den Speichen ausgebildet sein, die die Magnettaschen mit dem notwendigerweise vorhandenen Luftspalt zwischen Rotor und Stator verbinden. Diese Öffnungen trennen dabei einen jeweiligen Umfangspolabschnitt (ausgebildet von der jeweiligen Speiche) von einem benachbarten Umfangspolabschnitt des Rotors. Jeder Umfangspolabschnitt kann zu beiden Seiten jeweilige Vorsprünge (im Folgenden als "Haltevorsprünge" bezeichnet) ausbilden, an denen die Permanentmagnete in radialer Richtung anliegen und so in Position gehalten werden, wenn der Rotor rotiert. Sowohl die Magnettaschen als auch die besagten Außenumfangsöffnungen, die beide jeweils zwischen den Speichen des Rotors angeordnet sind, können bevorzugt gleichmäßig entlang der Umfangsrichtung verteilt sein. Denn so kann eine gleichmäßige Abfolge der magnetischen Pole des Rotors an seinem Außenumfang gewährleistet werden, was vorteilhaft für die Laufruhe des Motors ist.

Der Rotor kann in der xy-Radialebene gedanklich in drei, in radialer Richtung aufeinander folgende Radialbereiche unterteilt werden bzw. solche Radialbereiche ausbilden:

(i) einen zentralen Bereich ("achsnaher Bereich"). Dieser kann als ein Rotorjoch ausgeformt sein, welches vorzugsweise frei von Lufttaschen ausgebildet ist, aber eine zentrales Aufnahmeloch aufweisen kann. Der Zentralbereich / das Rotorjoch kann somit ein Aufnahmeloch zur Aufnahme einer Motorachse des Antriebsmotors ausbilden.

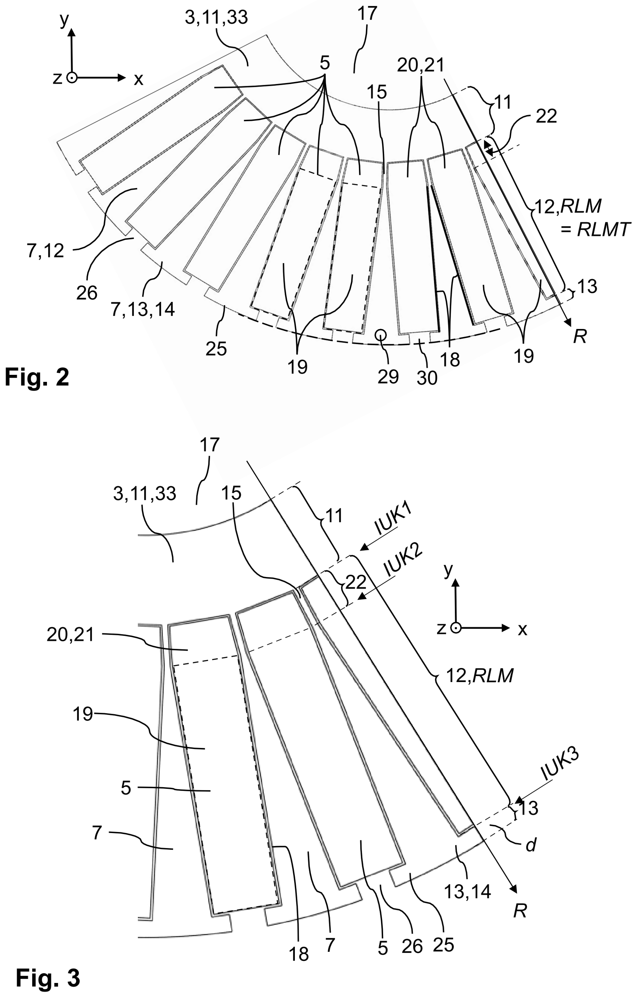

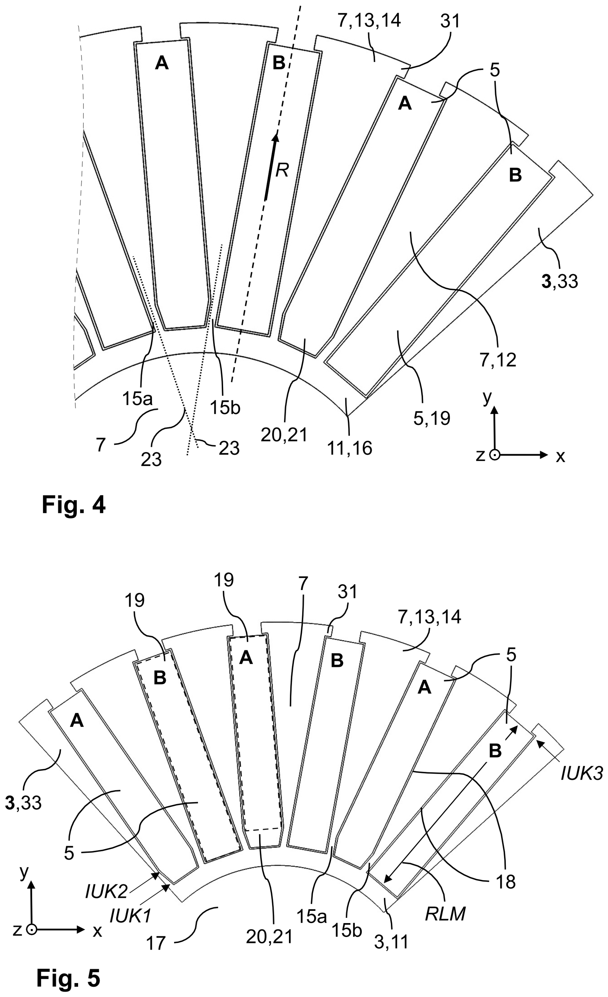

(ii) einen mittleren Bereich, in welchem sich die Permanent-magnete in radialer Richtung erstrecken (z.B. von IUK1 bis zu IUK3 - Vgl. Fig. 3 oder Fig. 5). Der mittlere Bereich kann dabei durch die Speichen des Rotors mit ausgebildet sein sowie durch jeweilige Verbindungsstege, welche jeweils eine Speiche mit dem Zentralbereich / dem Rotorjoch verbinden. Die Verbindungsstege können dabei auch als Teil der jeweiligen Speiche aufgefasst werden.

(iii) einen äußeren Bereich des Rotors. Dieser liegt somit radial außen und bildet insbesondere eine in Umfangsrichtung verlaufende Außenkontur des Rotors aus. Dieser äußerer Radialbereich des Rotors ist bevorzugt frei von Magneten ausgestaltet.

Der äußere Radialbereich des Rotors kann beispielsweise durch Speichenköpfe der Speichen des Rotors gebildet sein. Diese Speichenköpfe bilden dann jeweilige Umfangspolabschnitte des Rotors aus. Die Umfangspolabschnitte bilden dabei wiederum jeweils einen magnetischen Pol des Rotors aus (sobald die Permanentmagnete in die Magnettaschen eingesetzt sind). Eine Außenkontur der Umfangspolabschnitte und damit des Rotors kann hierbei bevorzugt einer Kreislinie folgen (wobei dann diese Kreislinie den Außendurchmesser des Rotors definiert). Hierdurch kann insbesondere erreicht sein, dass (abgesehen von Öffnungen zwischen den Umfangspolabschnitten) eine radiale Breite eines Luftspalts zwischen Rotor und Stator im Bereich der Umfangspolabschnitte entlang des Umfangs des Rotors stets gleichbleibend / konstant ausgestaltet ist. Mit anderen Worten weisen dann die Rotorbleche gerade keine polygonale Außenkontur auf, sondern eine Außenkontur, die einer Kreislinie folgt (mit Ausnahme der weitere Luftspalte verursachenden Öffnungen zwischen den Speichen).

Zwischen den einzelnen Speichenköpfen des Rotors sind wie erwähnt bevorzugt Luftspalte entlang der Umfangsrichtung ausgebildet. Diese Luftspalte können eine Länge g in Umfangsrichtung aufweisen, die kleiner als die Magnetbreite M ($g < M$) und besonders bevorzugt auch kleiner als die Speichenbreite S ausfallen können ($g < S$).

Der Rotor kann bevorzugt (vollständig) aus einem Paket aus Metallblechen (sogenannte Rotorbleche, beispielsweise mit einer jeweiligen Dicke von ca. 0,5 mm) aufgebaut sein, die in der axialen z-Richtung aufeinander folgen und jeweils parallel zur Radialebene verlaufen. Um magnetische Streuverluste zu reduzieren, werden bei vorbekannten Rotor-Designs oftmals nicht-magnetische Bauteile (wie z.B. ein nicht-magnetischer Ring) als Teile des Rotors verwendet. Die erfindungsgemäße Ausgestaltung des Rotors mittels jeweils einstückiger Rotorbleche, die das Blechpaket bilden, hat gegenüber solchen vorbekannten Lösungen (die einen modularen Rotor-Aufbau zeigen und bei denen das Rotorjoch oftmals aus einem nicht-magnetischen Material besteht) zwar den Nachteil, dass es zu Streuflüssen im Rotorjoch kommen kann. Doch gemäß der Erfindung können solche Streuverluste wirksam durch eine filigrane Ausgestaltung der Verbindungsstege reduziert werden, weil es dann in diesen Bereichen zu einer magnetischen Sättigung kommt. Erfindungsgemäß sind daher die Rotorbleche, aus welchem das Blechpaket gebildet ist, jeweils vollständig aus magnetischem Material (zum Beispiel aus Stahl) gebildet.

Ferner ist es bevorzugt, wenn die Rotorbleche jeweils den gesamten Rotorquerschnitt (also insbesondere die erwähnten Radialbereiche: zentraler, achsnaher Bereich; mittlerer Bereich und äußerer Bereich) ausbilden. Solche Rotorbleche können z.B. durch Stanzen oder Laserschneiden erhalten werden. Die jeweils einteilige Ausbildung des Rotorquerschnitts durch das jeweilige Rotorblech hat den wesentlichen Vorteil einer vereinfachten Montage, denn es müssen keine mehreren Teile aufwändig miteinander verbunden werden. Zudem können so Übergänge zwischen den erwähnten Radialbereichen (insbesondere im Bereich der Verbindungsstege zwischen zentralem und mitt-leren Bereich) sehr filigran ausgestaltet werden, ohne dass dies die mechanische Festigkeit des Rotors beeinträchtigt. Durch die einteilige Ausbildung der Rotorbleche kann somit eine höhere mechanische Festigkeit erzielt werden als bei mehrteiliger Ausgestaltung, sodass sehr hohe Drehmomente ohne Beeinträchtigung der Stabilität des Rotors übertragen werden können.

Jedes der Rotorbleche kann dabei entsprechende (beispielsweise mittels eines Lasers eingebrachte) Aussparungen aufweisen, um die Magnettaschen mit auszubilden. Die Rotor-bleche können ferner über axial verlaufende Verschraubungen zusammengehalten sein. Die Aufnahmetaschen können somit in axialer und radialer Richtung durch das Blechpaket hindurch verlaufen. Die Rotorbleche können also zum Beispiel über eine axiale Verschraubung miteinander verbunden sein. Um magnetische Streuflüsse zu unterdrücken, kann ferner auf jeder (axialen) Außenseite des Rotors ein Abschlussblech aus einem magnetisch nicht leitfähigen Material wie beispielsweise Edelstahl vorgesehen sein. Ein solches Abschlussblech kann dem Blechpaket auch zusätzliche mechanische Stabilität verleihen, insbesondere wenn das jeweilige Abschlussblech am radial äußersten Bereich (in der Nähe des Luftspalts) durchgängig ohne Unterbrechungen ausgestaltet ist. Das jeweilige Abschlussblech kann somit Lücken zwischen den Speichenköpfen des Rotors überbrücken und die Speichenköpfe somit mechanisch miteinander verbinden. Insbesondere kann so sichergestellt werden, dass sich die filigranen Speichen, die nur durch den dünnen Steg mit dem Rotorjoch verbunden sind, nicht verbiegen.

Bei dem erfindungsgemäßen Speichen-Design verlaufen die Feldlinien, die von den einzelnen Permanentmagneten ausgehen, in radialer Richtung, aber auch - in einem radial äußeren Bereich des Rotors - in der Umfangsrichtung. Die magnetischen Pole der Permanentmagnete sind dabei mit ihrer Nordpol-Südpol-Ausrichtung (vorzugsweis streng) in der Umfangsrichtung des Rotors orientiert. Auf diese Weise bilden sich an der umfangsseitigen Außenseite des Rotors, als im Bereich des Luftspalts zwischen Rotor und Stator, eine in Umfangsrichtung des Rotors wechselnde Folge von magnetischen Polen (N, S, N, S, ...) aus. Diese magnetischen Pole des Rotors versetzen schlussendlich durch Wechselwirkung mit dem von der Statorwicklung des Stators erzeugten magnetischen Drehfeld den Rotor in Rotation.

Erfindungsgemäß kann die Aufgabe auch durch weitere vorteilhafte Ausführungen gemäß den Unteransprüchen gelöst werden, die im Folgenden im Detail beschrieben werden:

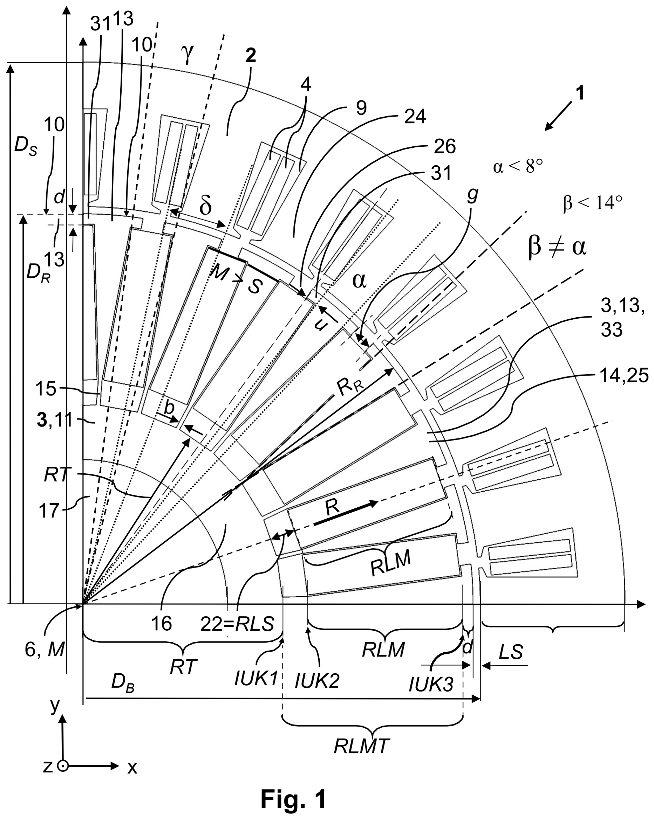

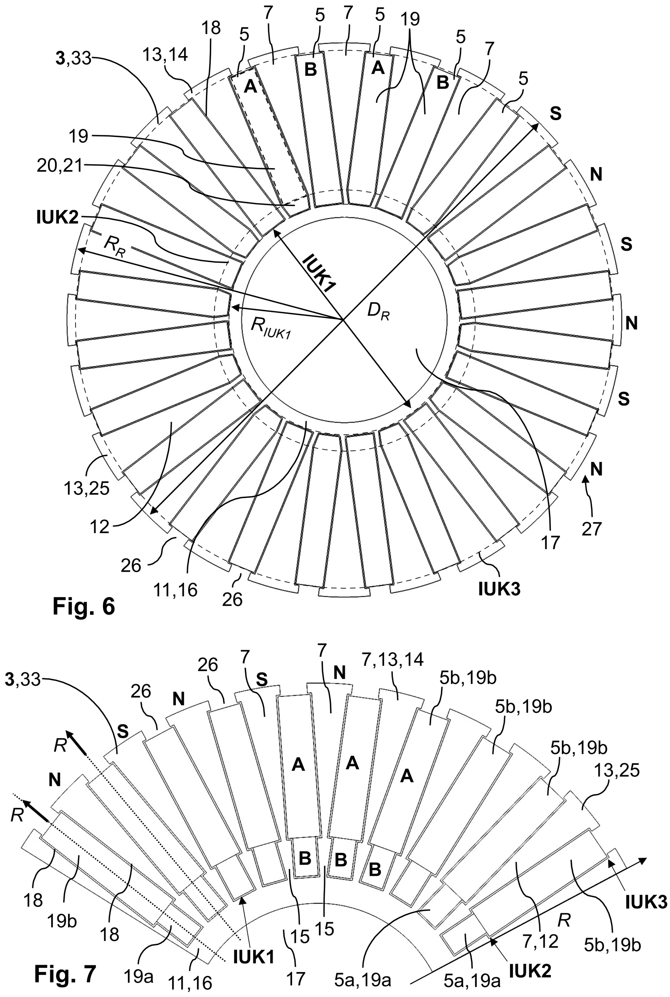

Die Erfindung hat erkannt, dass es für die gewünschte Hubmotor-Anwendung, bei welcher hohe Beschleunigungsmomente erzielt werden müssen, erforderlich ist, die magnetische Energiedichte im Luftspalt zu maximieren. Hierfür ist ein hoher magnetischer Fluss im Rotor vorteilhaft und dies kann erzielt werden, wenn die Speichen filigran ausgestaltet sind und somit nur einen begrenzten Winkelbereich belegen, weil es dann zu gewünschten magnetischen Sättigungseffekten im Bereich dieser Speichen kommt. Entsprechend kann vorgesehen sein, dass die Speichen in einem Radialbereich, in welchem die Permanentmagnete angeordnet sind (dies betrifft also - entlang der Radialachse R - denjenigen Bereich des Rotors, den die Permanentmagnete entlang der radialen Richtung R einnehmen, also beispielsweise von IUK1 bis zu IUK3 - vgl. Figur 6), jeweils bezogen auf einen Mittelpunkt M des Rotors, einen Winkelbereich $\alpha$ einnehmen, für den gilt: $\alpha < 18°$, vorzugsweise kann gelten $\alpha < 15°$ oder sogar $\alpha < 10°$ und bei sehr hohen Polzahlen von $PZ_R > 22$ unter Umständen sogar $\alpha < 8°$. Der Winkelbereich kann dabei am radial äußeren Ende des jeweiligen Magneten (also in Höhe von IUK3 - vgl. Figur 1) bestimmt werden, unter Vernachlässigung der erwähnten Haltevorsprünge, die lediglich dem Festhalten der Permanentmagnete dienen, wenn der Rotor rotiert. Gilt $\alpha < 15°$, so kann die Umfangsbreite der Permanentmagnete M u.U. kleiner sein als die Speichenumfangsbreite S (M < S); bei Polzahlen des Rotors von $PZ_R > 22$ kann hingegen typischerweise gelten: M > S.

Alternativ kann der Winkelbereich auch nach folgender (empirischer) quadratischer Gleichung in Abhängigkeit der Polzahl $PZ_R$ des Rotors (die der Anzahl $N_{PM}$ seiner Permanentmagnete entspricht $PZ_R = N_{PM}$) sinnvoll begrenzt werden:

$$\alpha < 0{,}0125° \times PZ_R^2 - 0{,}925° \times PZ_R + 22{,}5°$$

Bei einer solchen Ausgestaltung wird die Speichenumfangsbreite S stets kleiner ausfallen können als die Umfangsbreite der Permanentmagnete M, sodass gilt: S < M (wie noch anhand der Figuren klar werden wird).

Jede der Speichen des Rotors kann jeweils zwei gerade Längskanten als Anlageflächen für die Permanentmagnete ausbilden. Diese Längskanten der Speichen erstrecken sich in der xy-Radialebene bevorzugt entlang eines jeweiligen radial außen liegenden Bereichs des jeweiligen (an dieser Längskante anliegenden) Permanentmagneten.

Um die magnetische Energiedichte im Luftspalt zu maximieren ist es gemäß der Erfindung ebenso vorteilhaft, wenn die Speichen durch vergleichsweise schmale Verbindungsstege mit dem (frei von Magnettaschen ausgestalteten) zentralen Bereich des Rotors (Rotorjoch) verbunden sind, weil dadurch eine gewünschte magnetische Sättigung im Bereich der Stege erzielt werden kann, sodass sich die Felddichte im Luftspalt erhöht. Grundsätzlich wäre es aus demselben Grund vorteilhaft, die Stege vergleichsweise lang zu wählen. Eine lange Ausgestaltung der Stege ist jedoch kritisch in Bezug auf die mechanische Stabilität des Rotors. Daher sieht eine bevorzugte Ausgestaltung vor, dass sich die Speichen des Rotors bis zu einem Innenumfangskreis IUK2 erstrecken und die Stege dabei wie weiter unten ausgeführt dimensioniert sind. Von diesem Innenumfangskreis IUK2 können insbesondere die beschriebenen Längskanten jeweils nach radial außen wegführen.

Die besagten Verbindungsstege, die die Speichen des Rotors mit einem zentralen Bereich des Rotors verbinden, können sich (über die Speichen hinaus, also vom IUK2 ausgehend) radial innenseitig bis zu einem Innenumfangskreis IUK1 (der dann kleiner als IUK2 ausfällt) erstrecken. Die Differenz aus den Radien $R_{IUK1}$ und $R_{IUK2}$ der beiden Innenumfangskreise IUK1 und IUK2 kann somit als eine radiale Länge RLS der Verbindungsstege verstanden werden. Hierbei kann dann für RLS in Bezug auf eine radiale Ausdehnung/Länge RLM der Permanentmagnete (unabhängig davon, ob die jeweilige Magnettasche vollständig oder nur teilweise mit einem oder mehreren Magneten befüllt ist) gelten: RLS = $R_{IUK2}$-$R_{IUK1}$ < 0,18 RLM, vorzugsweise gilt: RLS < 0,16 RLM.

Ein erfindungsgemäß bevorzugter Wertebereich für das Verhältnis $R_{IUK1}/R_R$ (vgl. Fig. 6) ist: $0{,}48 \leq R_{IUK1}/R_R \leq 0{,}55$, bevorzugt gilt: $0{,}50 \leq R_{IUK1}/R_R \leq 0{,}54$.

Sofern der jeweilige Magnet die gesamte Magnettasche vollständig oder nahezu vollständig befüllt (dann gilt: RLM≈ RLMT, mit RLMT der radialen Länge der jeweiligen Magnettasche), kann zum Beispiel gelten: RLS < 0,16 RLM, vorzugsweise gilt: RLS < 0,14 RLM. Bei entsprechend großer Baugröße des Antriebsmotors kann sogar gelten RLS < 0,12 RLM.

Alternativ kann auch bezogen auf die radiale Länge der Magnettaschen gelten: RLS < 0,16 RLMT, bevorzugt gilt RLS < 0,14 RLMT, mit RLMT der radialen Länge der Magnettasche. Bei entsprechend großer Baugröße des Antriebsmotors kann sogar gelten RLMT < 0,12 RLM.

Die Permanentmagnete können radial innenseitig bis zum größeren Innenumfangskreis IUK2 reichen. Bevorzugt sind aber Ausgestaltungen, bei denen die Permanentmagnete auch Umfangsabschnitte des Rotors belegen, die entlang des Umfangs zwischen den Verbindungsstegen liegen. In einem solchen Fall können die Permanentmagnete demnach bis zum kleineren Innenumfangskreis IUK1 reichen oder zumindest über IUK2 hinaus. Wie noch anhand der Figur 7 gezeigt werden wird, ist es auch möglich, separate Permanentmagnete vorzusehen, die Aufnahmetaschen des Rotors befüllen, welche in Umfangsrichtung zwischen den Verbindungsstegen angeordnet sind.

Die beiden Längsflächen oder Längskanten jeder Speiche können dabei bevorzugt einen Winkel von $\beta < 18°$ einschließen, vorzugsweise kann gelten: $\beta < 15°$ oder sogar $\beta < 14°$ in Einzelfällen sogar $\beta < 13.5°$, insbesondere für einen Rotoraußendurchmesser von $D_R = [215 - 300]$ mm. Ein besonders bevorzugter Wertebereich für $\beta$ ist $11.5° < \beta < 13,5°$ was insbesondere in Kombination mit einem Rotoraußendurchmesser von $D_R = [200 - 300]$ mm zu einer hohen Effizienz des Antriebsmotors führt.

Die Magnetisierung der Permanentmagnete ist gemäß dem Speichenkonzept in der Umfangsrichtung ausgerichtet. Auf diese Weise können an der Außenseite des Rotors in Umfangrichtung alternierend aufeinander folgende magnetische Nord- und Südpole ausgebildet werden, die die magnetischen Pole des Rotors und damit dessen Polzahl $PZ_R$ definieren. Bei dem Speichendesign entspricht dabei wie erwähnt die Polzahl $PZ_R$ des Rotors der Anzahl $N_{PM}$ seiner Permanentmagnete: $PZ_R = N_{PM}$. Für eine hohe Effizienz des Antriebsmotors ist es gemäß der Erfindung dabei vorteilhaft, wenn dieser eine hohe Rotorpolzahl $PZ_R$ ($PZ_R \geq 20$) als auch eine hohe Anzahl $N_N$ an Nuten ($N_N \geq 24$) im Stator aufweist.

Eine besonders vorteilhafte Ausgestaltung für eine kleine Baugröße eines erfindungsgemäßen Antriebsmotors, die ein wie hierin beschriebenes filigranes Speichendesign (mit entsprechenden Werten für RLS, RLM, $\alpha$, $\beta$ etc.) aufweisen kann, sieht bei einer Baugröße von $D_R = [130 - 180]$ mm eine Rotorpolzahl $PZ_R$ im Bereich $8 \leq PZ_R \leq 14$ vor. Bei einem solchen Rotor-Design kann dann die Anzahl $N_N$ an Nuten im Bereich von $9 \leq N_N \leq 15$ im Stator gewählt sein.

Insbesondere bei größerer Baugröße des Antriebsmotors kann z.B. bei erfindungsgemäßen Ausgestaltungen gelten: $PZ_R \leq 36$ (in diesem Fall kann ferner bevorzugt für die Nutenzahl $N_N$ gelten: $N_N \leq 48$) oder $PZ_R \leq 32$ (in diesem Fall kann ferner bevorzugt gelten: $N_N \leq 40$).

Generell kann erfindungsgemäß die Anzahl $N_N$ an Nuten des Stators somit auf Werte von $N_N \leq 72$, oder sogar $N_u \leq 54$ begrenzt sein. Denn bei zu hoher Polzahl (und sich daraus ergebender hoher Nutenanzahl) lassen sich die erfindungsgemäßen Vorteile des Speichen-Designs in der Praxis nicht mehr realisieren.

Eine besonders bevorzugte Ausgestaltung für einen erfindungsgemäßen Antriebsmotor von kleinerer Baugröße sieht vor: $D_R = [130 - 180]$ mm, $PZ_R = 10$ und $N_N = 12$. Hierbei kann insbesondere noch vorgesehen sein: $\alpha < 18°$.

Liegt die Baugröße des Rotors hingegen bei $D_R > 180$ mm, so kann entsprechend für eine Anzahl $N_{PM}$ der Permanentmagnete des Rotors gelten: $N_{PM} \geq 20$, vorzugsweise kann gelten: $N_{PM} \geq 24$ und somit auch $PZ_R \geq 20$ oder $PZ_R \geq 24$. Ferner kann ergänzend oder aber alternativ hierzu vorgesehen sein, dass für die Anzahl an Nuten des Stators $N_N$ gilt: $N_N \geq 24$, vorzugsweise kann gelten: $N_N \geq 28$ oder sogar $N_N \geq 32$.

Generell können erfindungsgemäße Designs vorsehen, dass die Polzahl $PZ_R$ hingegen nach oben begrenzt ist (sehr hohe Polzahlen sind somit zu vermeiden), damit die jeweilige einzelne Speiche nicht zu dünn und damit bruchanfällig wird. Entsprechend kann vorgesehen sein, dass gilt: $PZ_R \leq 40$, $PZ_R \leq 36$ oder sogar $P2_R \leq 32$ (unabhängig von der Baugröße des Antriebsmotors). Je kleiner der Außendurchmesser des Antriebsmotors und damit des Rotors, umso kleiner muss dabei die Polzahl $PZ_R$ gewählt werden, um empirisch ermittelte Mindest-festigkeiten der Speichen nicht zu unterschreiten, insbesondere im Bereich der filigranen Verbindungsstege.

Eine besonders bevorzugte Ausgestaltung *Protol* sieht eine Polzahl $PZ_R$ des Rotors von $PZ_R \geq 28$ vor, vorzugsweise in Verbindung mit einer Anzahl $N_N$ an Nuten des Stators von $N_N \geq 36$, also insbesondere $PZ_R = 28$ und $N_N = 36$. Hierbei kann zusätzlich noch gelten: $D_R > 200$ mm.

Eine weitere bevorzugte Ausgestaltung *Proto2,* die sich bei größerer Gesamtgröße des Antriebsmotors eignet, sieht vor: $PZ_R \geq 30$, vorzugsweise und $N_N \geq 36$, also insbesondere $PZ_R = 30$ und $N_N = 36$. Hierbei kann zusätzlich noch gelten: $D_R > 250$ mm.

Als generelle Design-Regel schlägt die Erfindung dabei vor, ein Verhältnis aus der Polzahl des Rotors $PZ_R$ und einem Bohrungsdurchmesser $D_B$ (dies entspricht dem Innendurchmesser des Stators; somit gilt mit Blick auf Figur 1: $D_B = D_R + 2 LS$) von $PZ_R/D_B > 0.120$ zu wählen. Bei einem Bohrungsdurchmesser $D_B$ (=Stator-Innendurchmesser) von 230 mm kann so beispielsweise eine Rotorpolzahl von $PZ_R = 28$ gewählt sein; bei $D_B = 250$ mm hingegen bereits eine Rotorpolzahl von $PZ_R = 30$ oder $PZ_R = 32$. Bei den zuvor beschriebenen Ausgestaltungen *Protol* und *Proto2* kann zum Beispiel eine Polzahl von $PZ_R = 28$ mit einem Wert von $D_B = 230$ mm und eine Polzahl von $PZ_R = 30$ mit einem Wert von $D_B = 290$ mm kombiniert sein.

Allgemein formuliert, kann ein sinnvoller Wertebereich für den Bohrungsdurchmesser $D_B = (D_R + 2LS)$, insbesondere bei Polzahlen von $PZ_R \geq 20$, erfindungsgemäß als Funktion der Polzahl des Rotors $PZ_R$ mit folgender empirischer Formel bestimmt werden:

$$D_B > 31/42 \times PZ_R^2 - 12,8 \times PZ_R.$$

Damit können sich z.B. folgende Mindestwerte für $D_B$ ergeben: 118 mm bei $PZ_R = 24$ oder 220 mm für $PZ_R = 28$

oder 280 mm für $PZ_R = 30$. Mit dieser Formel kann selbstverständlich auch für eine gewünschte Baugröße $D_S$ und damit $D_B$ eine sinnvolle Polzahl $PZ_R$ für den Rotor erhalten werden. Je kleiner die Baugröße des Antriebsmotors, umso kleiner muss entsprechend dem obigen empirischen Ansatz die Polzahl $PZ_R$ gewählt werden.

Die Effizienz des Antriebsmotors lässt sich erfindungsgemäß auch dadurch steigern, dass der Luftspalt nach radial außen verlagert wird. Entsprechend kann für ein Verhältnis zwischen einem maximalen Außendurchmesser $D_R$ des Rotors und einem maximalen Außendurchmesser $D_S$ des Stators gelten: $D_R/D_S > 0{,}70$, vorzugsweise gilt: $D_R/D_S > 0{,}75$. Auch hierdurch kann der magnetische Fluss vergrößert werden, weil die Permanentmagnete umso weiter nach radial außen reichen, je größer das Verhältnis $D_R/D_S$ gewählt wird. Der Luftspalt zwischen Rotor und Stator mit radialer Ausdehnung LS sollte so klein wie möglich gewählt werden; er kann unter Berücksichtigung von Fertigungstoleranzen im Bereich von unter 0,8 mm liegen.

Eine besonders bevorzugte Ausgestaltung sieht ein Ferrit-Rotor-Design vor: Entsprechend können die Permanentmagnete als Ferrit-Magnete ausgestaltet sein, und zwar vorzugsweise mit einer magnetischen Flussdichte von wenigstens 0,35 T oder sogar von mindestens 0,38 T.

Ein jeweiliges radial außenliegendes Ende des jeweiligen Permanentmagneten kann in der Radialrichtung R um einen Abstand d von einem Außenumfang des Rotors beabstandet sein (sodass die Permanentmagnete nach radial innen versetzt sind). Der Abstand d kann dabei im Bereich von [2.50 - 5.0] mm gewählt sein; dies stellt einen geeigneten technischen Kompro-miss dar: Fällt d größer aus, wird der magnetische Fluss unnötig reduziert; fällt d hingegen kleiner aus, droht in bestimmten Betriebszuständen des Motors eine Entmagnetisierung der radial äußersten Bereiche des jeweiligen Permanentmagneten. Dieser Abstand d (= radiale Höhe der Speichenköpfe der Speichen des Rotors) kann dabei einer radialen Ausdehnung der Umfangspolabschnitte (= Speichenkopf) bzw. des äußeren radialen Bereichs des Rotors entsprechen, wie oben eingeführt. Der Vorteil in der Verwendung von Ferriten (die hartmagnetisch oder aber weichmagnetisch sein können) besteht darin, dass diese nur ca. ein Zehntel der Materialkosten im Vergleich zu Permanentmagneten auf Basis seltener Erden verursachen und zudem besser verfügbar sind.

Allerdings besteht dann eine wesentliche Herausforderung darin, das Design des Antriebsmotors so auszugestalten, dass trotz der wesentlich geringeren Flussdichte B der Ferrite ein ausreichendes Drehmoment mit dem Antriebsmotor erzeugbar ist, insbesondere beim Anfahren. Gemäß der Erfindung kann die geringere Flussdichte von Permanentmagneten, die frei von seltenen Erden sind, grundsätzlich durch ein angepasstes Speichen-Design ausgeglichen werden. Gerade bei Verwendung von Ferrit-Magneten ist daher gemäß der Erfindung ein filigranes Speichendesign entscheidend, um die vergleichsweise geringe magnetische Flussdichte dieser Permanentmagnete auszugleichen.

Daher sieht eine bevorzugte Ausgestaltung vor, dass eine jeweilige Magnetbreite M der Permanentmagnete, welche jeweils in Umfangsrichtung als eine Umfangslänge am radial äußersten Punkt des jeweiligen Permanentmagneten gemessen werden kann, größer ausfällt als eine jeweilige Speichenbreite S, die ebenfalls in Umfangsrichtung als eine Umfangslänge in Höhe des radial äußersten Punkts des jeweiligen Permanentmagneten gemessen wird.

Alternativ oder aber ergänzend zu dem Design-Kriterium M > S kann auch vorgesehen sein, dass ein Winkelbereich $\gamma$, der vom jeweiligen Permanentmagnet an seinem radial äußersten Ende in der Radialebene (in Bezug auf den Mittelpunkt M) eingenommen wird, größer ausfällt als ein Winkelbereich $\alpha$, der von einer zu diesem Permanentmagneten benachbarten Speiche in der Radialebene in derselben radialen Höhe eingenommen wird, und zwar jeweils bezogen auf das Zentrum M des Rotors. Die Speichen des Rotors, die jeweils einen Winkelbereich $\alpha$ einnehmen, können dabei an ihrem jeweils radial außenliegenden Ende Speichenköpfe ausbilden, die jeweils über diesen Winkelbereich $\alpha$ überstehen (dies sind die "Haltevorsprünge"). Die Speichenköpfe können somit einen Winkelbereich $\delta > \alpha$ einnehmen.

Der jeweilige Speichenkopf kann somit an seinem linken und rechten Ende jeweils einen Haltevorsprung ausbilden mit einer Umfangslänge u (gemessen an der radial innen liegenden Seite des Haltevorsprungs, die dem Permanentmagneten gegenüberliegt). Diese Haltevorsprünge können als Anschläge die Permanentmagnete in der radialen Richtung begrenzen und somit zentrifugal wirkende Kräfte aufnehmen, die bei Rotation des Rotors entstehen.

Auch hinsichtlich der radialen Anordnung der Magnete und ihrer (jeweiligen) radialen Ausdehnung RLM sieht die Erfindung bevorzugte Ausgestaltungen vor: So können sich die Permanentmagnete jeweils in radialer Richtung mindestens über eine radiale Länge RLM erstrecken, für die im Verhältnis zum Außendurchmesser $D_R = 2R_R$ des Rotors bzw. zu dessen Radius $R_R$ gilt: $RLM \geq 41\% \ R_R$, vorzugsweise kann gelten $RLM \geq 42\% \ R_R$ und besonders bevorzugt $RLM \geq 43\% \ R_R$.

Ergänzend oder alternativ kann auch gelten: $RLM \leq 49\% \ R_R$, vorzugsweise $RLM \leq 48\% \ R_R$ und besonders bevorzugt $RLM \leq 47\% \ R_R$. Ein besonders bevorzugter Wertebereich für das Verhältnis $RLM/R_R$ ist insbesondere: $43\% \ R_R \leq RLM \leq 47\% \ R_R$.

Die Magnettaschen (und damit auch das radial innen liegende Ende des jeweiligen Permanentmagneten, sofern die Magnettasche vollständig von dem Permanentmagnet eingenommen wird) können bis in eine radiale Tiefe RT (gemessen vom Zentrum M des Rotors aus) geführt sein, für die gilt: $45\% \ R_R < RT < 55\% \ R_R$, mit $R_R$ dem Radius des Rotors bis zu seinem Außendurchmesser, wobei bevorzugt gilt: $RT < 54\% \ R_R$.

Für eine radiale Gesamtlänge der Magnettaschen RLMT (gemessen von IUK1 bis zu IUK3, die bei vollständigem Ausfüllen der Magnettaschen auch der radialen Länge der Magnete entsprechen kann, sodass dann gilt: RLM ≈ RLMT) kann gelten:

42% $R_R$ < RLMT < 49% $R_R$, bevorzugt gilt: 43% $R_R$ < RLMT < 47% $R_R$.

Wie bereits erwähnt, ist es gemäß der Erfindung vorteilhaft, wenn die Verbindungsstege in Umfangsrichtung schmal ausgestaltet werden. Daher sieht eine bevorzugte Ausgestaltung vor, dass die Speichen über Verbindungsstege mit einem zentralen Bereich des Rotors verbunden sind, wobei dieser zentrale Bereich bevorzugt frei von Lufttaschen ausgestaltet ist und insbesondere in Form eines massiven Rotorjochs ausgestaltet sein kann. Hierbei kann der zentrale Bereich des Rotors ein Aufnahmeloch ausbilden, das dann zur Aufnahme einer Motorachse dienen kann. Die Permanentmagnete reichen dabei bevorzugt bis zu einem Innenumfangskreis IUK1, an welchem die Verbindungsstege in den zentralen Bereich des Rotors übergehen, um auf diese Weise den magnetischen Fluss zu maximieren (in diesem Fall füllen die Permanentmagnete die Magnettaschen vollständig aus). Generell können somit die Verbindungstege als auch der zentrale Bereich des Rotors die Magnettaschen des Rotors mit begrenzen.

Bevorzugt können die Verbindungsstege an ihrer (jeweils) dünnsten Stelle in Umfangsrichtung eine Umfangsbreite b von b < 1,80 mm oder sogar von b < 1,70 mm aufweisen. Je nach Baugröße des Antriebsmotors, kann die Umfangsbreite b auch alternativ nach folgender empirischer Formel begrenzt werden:

$$b < (2\,\pi\,R_{IUK1}/PZ_R) \times 0,15$$

mit $R_{IUK1}$ dem Radius des Innenumfangskreis IUK1 (gemessen in mm) bis zu welchem die Magnettaschen nach radial innen geführt sind und $PZ_R$ der Polzahl des Rotors. Bei einer solchen Ausgestaltung wird die Stegbreite b somit weniger als 15%, oder sogar weniger als 13%, des zu einem Pol des Rotors korrespondierenden Umfangslängenabschnitts $2\,\pi$ $R_{IUK1}/PZ_R$ von IUK1 betragen. In bevorzugten Ausgestaltungen kann der besagte Wert sogar weniger als 12.5% betragen.

Die Erfindung schlägt auch neuartige geometrische Formen der Permanentmagnete vor: Beispielsweise sieht eine Ausgestaltung vor, dass alle der vom Rotor getragenen Permanentmagnete, bezogen auf die erwähnte Radialebene, einen (zumindest abschnittsweise oder aber vollständig) polygonalen Querschnitt zeigen. Eine solche Form der Permanentmagnete hat den Vorteil, dass diese einfach fertigbar ist.

Hierbei ist es ferner vorzuziehen, wenn wenigstens einige oder aber alle der vom Rotor getragenen Permanentmagnete einen radial innenliegenden keilförmigen Bereich aufweisen. Unter einer Keilform kann hier insbesondere verstanden werden, dass die Magnete, bezogen auf Ihren Querschnitt in der xy-Radialebene, in dem keilförmigen Bereich einseitig oder aber beidseitig nach radial innen hin zulaufen. Insbesondere können die Magnete in dem keil- oder trapezförmigen Bereich Außenkanten ausbilden, die entlang der Radialrichtung R verlaufen.

Der keilförmige Bereich kann insbesondere eine Trapezform aufweisen. Unter einer Trapezform werden hier sowohl rechtwinklige als auch nicht rechtwinklige Trapeze verstanden. Somit muss der keilförmige/trapezförmige Bereich des Magneten nicht zwingend achsensymmetrisch in Bezug auf die Radialrichtung ausgestaltet sein, sondern es sind im Rahmen der Erfindung auch asymmetrische Formgebungen möglich.

Der keilförmige/trapezförmige Bereich des jeweiligen Magneten kann dabei direkt an die erwähnten Verbindungsstege angrenzen, die die Speichen des Rotors mit dem zentralen Radialbereich des Rotors verbinden. Bei einer solchen Ausgestaltung können einige oder sogar alle der Verbindungsstege eine mittlere Verlaufsrichtung zeigen, die in der Radialrichtung R ausgerichtet ist. Dies ist günstig, um Zentrifugalkräfte aufnehmen zu können, sodass die Verbindungsstege besonders filigran ausgestaltet werden können.

Darüber hinaus ist es für eine einfache Fertigung vorzuziehen, wenn alle der vom Rotor getragenen Permanentmagnete wenigstens einen rechteckigen Bereich in der Radialebene aufweisen.

Bevorzugt folgen alle Permanentmagnete des Rotors (unabhängig davon, ob ein oder zwei unterschiedliche Typen von Magneten eingesetzt werden) mit ihrer Querschnittsform dem jeweiligen Verlauf der direkt benachbarten Verbindungsstege in der Radialebene, sodass im Bereich der Verbindungsstege keine Lufttaschen zwischen den Permanentmagneten und den Verbindungsstegen entstehen (sondern die jeweilige zwischen den Verbindungsstegen angeordnete Magnettasche vollständig vom Magneten ausgefüllt wird). Mit anderen Worten können also die Verbindungsstege die erwähnten Magnettaschen mit begrenzen.

Die Permanentmagnete können bevorzugt in ihrer Form der Form der zugehörigen Magnettasche entsprechen, sodass die Permanentmagnete die Magnettaschen, zumindest im mittleren Radialbereich des Rotors bevorzugt aber insgesamt, vollständig ausfüllen.

Es ist ferner zur Vermeidung von Lufttaschen vorzuziehen, wenn die Permanentmagnete mit ihren radial innen liegenden Stirnflächen jeweils direkt am Rotorjoch/am Zentralbereich des Rotors anliegen, sodass auch in diesem Bereich keine Lufttaschen (von relevanter Größe) entstehen. Es versteht sich, dass aufgrund von Fertigungstoleranzen dennoch gewisse Luftspalte zwischen Rotor und Permanentmagneten vorhanden sein können.

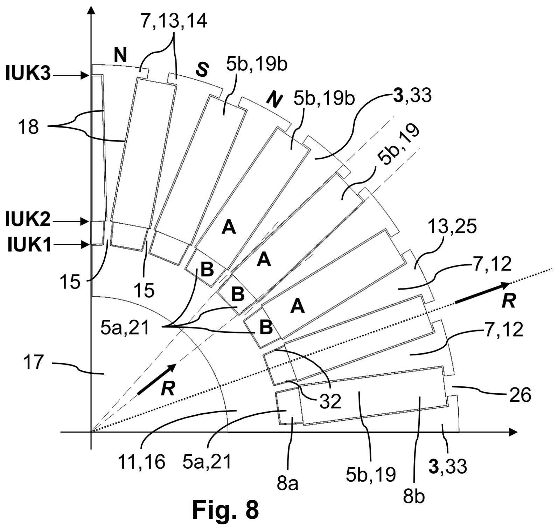

Eine besonders ungewöhnliche erfindungsgemäße Ausgestaltung sieht vor, dass wenigstens zwei unterschiedliche Typen von Permanentmagneten in dem Antriebsmotor eingesetzt werden. Somit können die Permanentmagnete des Rotors zwei unterschiedliche Geometrie-Typen A und B umfassen. Mit anderen Worten können somit die Magnettaschen unterschiedliche Formgebungen aufweisen (sodass diese zur Aufnahme von unterschiedlichen Geometrie-Typen an Permanentmagneten ausgestaltet sind, wobei die Magnettaschen auch überlappen / ineinander übergehen können - siehe die Magnettaschen 8a und 8b in Figur 8).

Bei Verwendung zweier unterschiedlichen Typen von Permanentmagneten A und B ist es bevorzugt, wenn einer der beiden Typen (z.B. derjenige Typ, der radial innen angeordnet ist, Vgl. Fig. 8) radial innenseitig eine Keilform aufweist (Vgl. die Figuren 4-6 und 8). Hierbei kann insbesondere vorgesehen sein, dass ein Typ an Permanentmagneten, welcher im Rotor radial innen angeordnet ist (Vgl. Typ B in Fig. 8), Außenkanten aufweist, die entlang der Radialrichtung R verlaufen, um so die gewünschte Keilform zu erreichen (Vgl. Fig. 8).

Generell ist es bei Verwendung von zwei Typen A und B, die radial hintereinander angeordnet sind, von Vorteil und daher bevorzugt, wenn diese in einer gemeinsamen (z.B. zweiteiligen wie im Beispiel der Fig. 8) Magnettasche angeordnet sind. Auf diese Weise können die beiden Magnete A und B unmittelbar in Kontakt zueinander stehen, was Streuverluste vermeidet. Gleichzeitig ermöglicht die Aufteilung in zwei separate Magnete A und B jedoch eine einfachere und damit kostengünstigere Fertigung des jeweiligen Magneten.

Bei Verwendung von (wenigstens) zwei unterschiedlichen Typen A und B an Permanentmagneten können sich die Typen A und B somit in Umfangsrichtung abwechseln (Vgl. Fig. 6) oder aber die Typen A und B können in der Radialrichtung R hintereinander angeordnet sein (vgl. Fig. 7 und 8). Bei der letztgenannten Ausgestaltung ist es vorteilhaft, wenn dann der radial innenliegende Typ B die erwähnte Keilform aufweist (Vgl. Fig. 8). Alle diese Ausgestaltungen führen dazu, dass der magnetische Fluss vergrößert werden kann, was günstig für die Effizienz des Motors ist, und dass gleichzeitig eine ausreichende mechanische Stabilität der einstückig ausgestalteten Rotorbleche, insbesondere im Bereich ihrer filigranen Stege, gewährleistet werden kann (Vgl. Fig. 8).

Eine Ausgestaltung sieht vor, dass zwei unterschiedliche Geometrie-Typen A und B der Permanentmagnete in Umfangsrichtung abwechselnd in (in diesem Fall mit jeweils unterschiedlicher Geometrie ausgestaltete) zugehörige Magnettaschen des Rotors eingesetzt sind. Hierbei ist es besonders bevorzugt, wenn (jeweils bezogen auf die xy-Radialebene) die Permanentmagnete eines der beiden Geometrie-Typen (z.B. der Typ B in Fig. 5) eine rechteckige Querschnittsform aufweisen (da diese einfach fertigbar ist - Vgl. die Figuren 4-8) und/ oder wenn die Permanentmagnete eines der beiden Typen (z.B. die Permanentmagnete des Geometrie-Typs A in Fig. 5) radial innenseitig eine Keilform aufweisen (siehe Figuren 4-6). Diese Keilform kann durch einen trapezförmigen Bereich (wie zuvor erläutert) realisiert sein (Vgl. Figur 4).

Bei einer solchen Verwendung von zwei unterschiedlichen Geometrie-Typen A und B von Magneten ist es für eine gleichmäßige Ausbildung der magnetischen Pole des Rotors vorzuziehen, wenn eine jeweilige Speichenbreite S der jeweiligen Speiche, gemessen in radialer Höhe des radial äußersten Punkt des jeweiligen Permanentmagneten, stets gleichbleibend groß, also konstant, gewählt ist. Ferner ist es bei Verwendung von zwei unterschiedlichen Geometrie-Typen auch bevorzugt, wenn alle Permanentmagnete desselben Typs die gleiche radiale Ausdehnung RLM aufweisen und auch innerhalb desselben mittleren Bereichs des Rotors angeordnet sind (also gerade keinen radialen Versatz zueinander aufweisen). Bei einer solchen Ausgestaltung können somit die radialen Längen $RLM_A$ und $RLM_B$ der beiden Typen A und B gleich lang sein (wie im Beispiel der Figur 4).

Beispielsweise können die Permanentmagnete, entweder alle oder aber nur diejenigen des Typs A oder nur diejenigen des Typs B, radial innenseitig (also im Bereich der Verbindungsstege zwischen dem Zentralbereich des Rotors und den radial außen liegenden Speichen) eine ein- oder beidseitige Anfasung aufweisen. Eine solche Anfasung kann vorzugsweise so ausgestaltet sein, dass die jeweilige Außenkante des betroffenen Permanentmagneten im Bereich eines zugehörigen Verbindungsstegs in radialer Richtung verläuft. Auf diese Weise kann erreicht sein, dass sich die Permanentmagnete (jeweils) bis zu einem Innenumfangskreis IUK1 erstrecken, an welchem die Verbindungsstege in den Zentralbereich des Rotors / das Rotorzentrum / das Rotorjoch übergehen.

Kennzeichnend für ein erfindungsgemäßes Rotor-Design des Antriebsmotors kann auch eine nicht-radiale (also eine schräg zur Radialrichtung R verlaufende) Ausrichtung der Verbindungsstege sein, welche die Speichen mit dem zentralen Bereich des Rotors verbinden. Entsprechend kann vorgesehen sein, dass die Speichen des Rotors über Verbindungsstege mit dem zentralen Bereich des Rotors verbunden sind und dass eine jeweilige mittlere Verlaufsrichtung von einzelnen oder von allen dieser Verbindungsstege jeweils schräg zur Radialrichtung ausgerichtet ist. Beispielsweise kann die jeweilige Verlaufsrichtung in einem Winkel von mehr als 5° zu Radialrichtung R verlaufen. Je nach Ausgestaltung ist es dabei insbesondere möglich, dass sich die Verlaufsrichtungen von benachbarten der Verbindungsstege kreuzen, wobei der Kreuzungspunkt hierbei im zentralen Bereich des Rotors liegen kann. Auch eine solche Ausgestaltung ermöglicht es, einfach zu fertigende Typen von Magneten zu verwenden und damit die Herstellung zu vereinfachen.

Alternativ hierzu kann gemäß einer weiteren Ausgestaltung vorgesehen sein, dass je (insbesondere jeweils zwischen zwei Speichen) zwei unterschiedliche Geometrie-Typen A und B der Permanentmagnete in der Radialrichtung R hintereinander angeordnet sind. Bei einer solchen Ausgestaltung können beispielsweise zwei quaderförmige Geometrie-Typen A und B eingesetzt werden oder Geometrien die sich stärker unterscheiden.

Eine außergewöhnliche, aber dennoch erfindungsgemäße Ausgestaltung sieht eine Geometrie der Permanentmagnete ohne Keilform auf Basis von zwei rechteckigen Geometrie-Typen A und B von Permanentmagneten vor (z.B. wie in Figur 7 illustriert): Somit können einzelne oder aber alle der Magnettaschen des Rotors, jeweils bezogen auf die Radialebene, einen Querschnitt zeigen, der zwei rechteckige Bereiche unterschiedlicher Größe umfasst. Eine solche Ausgestaltung der Magnettaschen lässt sich dann insbesondere damit kombinieren, dass jeweils zwei quaderförmige Permanentmagnete A und B in radialer Richtung hintereinander in der jeweiligen Magnettasche angeordnet werden/sind. In diesem Fall können sich die radialen Längen der Permanentmagnete $RLM_A$ und $RLM_B$ auch erheblich unterscheiden. Hierbei ist es besonders günstig, wenn der Typ B radial innen und der Typ A radial außen angeordnet wird und ferner gilt: $RLM_A > 3\ RLM_B$.

Bei einer solchen Ausgestaltung kann ein radial außenliegender der zwei rechteckigen Bereiche (und somit insbesondere ein erster Permanentmagnet A, wie in Fig. 7 beispielhaft illustriert) an Längskanten der Speichen anliegen, während ein radialinnenliegender der zwei rechteckigen Bereiche der Magnettasche (d.h. insbesondere auch ein radial innenliegender zweiter Permanentmagnet B - Vgl. z.B. Fig. 7), an Verbindungsstegen des Rotors anliegt, welche jeweils, wie bereits mehrfach erläutert, die Speichen mit einem zentralen Bereich des Rotors verbinden.

Gemäß der Erfindung ist es vorteilhaft, wenn die Magnete sowohl im Bereich der Verbindungsstege als auch im Bereich des Außenumfangs des Rotors jeweils einen hohen Anteil am dort bestehenden Umfangskreis (IUK1/IUK2/IUK3) des Rotors einnehmen, weil hierdurch der magnetische Fluss maximiert wird, und insbesondere eine gewünschte ausreichende magnetische Sättigung im Bereich der Verbindungsstege erzielt werden kann (Eine hohe magnetische Sättigung im Bereich der Verbindungsstege reduziert den Streufluss im Rotor und führt so zu einer gewünschten Konzentration des magnetischen Flusses im Luftspalt zwischen Stator und Rotor, was wiederum günstig für einen hohen Leistungsfaktor ist), um den Verlauf der Feldlinien günstig zu beeinflussen. Daher schlägt eine Ausgestaltung vor, dass in radialer Höhe eines radial äußersten Innenumfangskreises IUK3, bis zu dem sich die Permanentmagnete erstrecken, die Permanentmagnete insgesamt wenigstens 50% oder wenigstens 51%, oder sogar wenigstens 52% einer jeweiligen Umfangslänge $L_{IUK3}$ des Innenumfangskreises IUK3 belegen. Hierdurch kann insbesondere die Energiedichte im Spalt zwischen Rotor und Stator erhöht werden.

In gleicher Weise kann, insbesondere sofern die Magnettaschen vollständig vom jeweiligen Permanentmagneten ausgefüllt sind, vorgesehen sein, dass in radialer Höhe des Innenumfangskreises IUK1 (an welchem die Verbindungsstege, welche die Speichen mit dem zentralen Bereich des Rotors verbinden, in den zentralen Bereich des Rotors übergehen; IUK1 kann insbesondere der Innenumfangskreis sein, bis zu dem sich die Permanentmagnete nach radial innen erstrecken - Vgl. z.B. Fig. 3 oder Fig. 6) die Permanentmagnete insgesamt wenigstens 84% oder sogar wenigstens 86% der Umfangslänge $L_{IUK1}$ des Innenumfangs-kreises IUK1 belegen.

In radialer Höhe des Innenumfangskreises IUK2 (an welchem die Verbindungsstege in die Speichen übergehen) können die Permanentmagnete insgesamt wenigstens 85% oder wenigstens 87% der Umfangslänge $L_{IUK2}$ des Innenumfangskreises IUK2 belegen. Bei solchen Ausgestaltungen sind die Magnete somit sehr eng entlang der Umfangsrichtung zueinander benachbart, wodurch eine hohe magnetische Sättigung im Bereich der Verbindungsstege und damit eine gewünschte Konzentration des magnetischen Flusses im Luftspalt zwischen Stator und Rotor erreicht wird. Dies ist wiederum günstig, um einen hohen Leistungsfaktor cos φ zu erzielen.

Das erfindungsgemäße Design lässt sich weiter verbessern, wenn ein axialer Überstand der Permanentmagnete über den Rotor vorgesehen wird: Entsprechend können einzelne, vorzugsweise jedoch alle, der vom Rotor getragenen Permanentmagnete in axialer Richtung der Rotationsachse des Rotors über den Stator und/oder über den Rotor (also insbesondere über ein den Rotor ausbildenden Blechpaket) überstehen. Hierbei ist es bevorzugt, wenn dieser axiale Überstand beidseitig (in Bezug auf die Rotationsachse) ausgestaltet ist. Beispielsweise kann der besagte axiale Überstand an beiden Seiten des Stators jeweils wenigstens 5 mm betragen, unabhängig von der Baugröße des Motors. Hierbei kann der Rotor nicht oder aber höchstens um 10 % einer axialen Länge des Stators über den Stator jeweils auf beiden Seiten überstehen. Bei einer axialen Länge des den Rotor ausbildenden Blechpakets von 95 mm kann somit ein Überstand von jeweils 5 mm rechts und links ausreichen, um eine signifikante Reduktion der Effekte von magnetischen Streufeldern und damit eine hohe Homogenität des magnetischen Flusses im Luftspalt zwischen Rotor und Stator zu erzielen.

Die Erfindung wird nun anhand von Ausführungsbeispielen näher beschrieben, ist aber nicht auf diese beschränkt, sondern in den Ansprüchen definiert. Es zeigt:

| | |
|---|---|
| Figur 1 | eine maßstabsgetreue Querschnittsansicht eines Simulationsmodells, welches zur computergestützten Untersuchung von erfindungsgemäßen Antriebsmotoren eingesetzt wurde, wobei lediglich ein Quadrant illustriert ist, |
| Figur 2 und Figur 3 | Teilausschnitte einer möglichen Ausgestaltung eines erfindungsgemäßen Rotors als Teil eines erfindungsgemäßen Antriebsmotors, |
| Figur 4 | eine weitere mögliche Ausgestaltung eines erfindungsgemäßen Rotors unter Verwendung von |

zwei Typen A und B von unterschiedlichen Permanentmagneten,

Figur 5             eine weitere Ansicht des Rotor-Designs gemäß Figur 4,

Figur 6             eine vollständige Querschnittsansicht des Rotor-Designs gemäß Figur 4 und Figur 5,

Figur 7             eine weitere Teilansicht einer möglichen Ausgestaltung eines erfindungsgemäßen Rotors unter Verwendung von zwei unterschiedlichen Typen A und B von Permanentmagneten, die aber beide quaderförmig ausgestaltet sind und schließlich

Figur 8             eine weitere Teilansicht einer möglichen Ausgestaltung eines erfindungsgemäßen Rotors unter Verwendung von zwei unterschiedlichen Typen A und B von Permanentmagneten.

Die Figur 1 zeigt eine Querschnittsansicht entlang der Rotationsachse 6 auf ein Simulationsmodell, mit dem erfindungsgemäß ausgestaltete Antriebsmotoren 1, genauer die magnetischen Feldverteilungen, simuliert wurden, um experimentelle Ergebnisse zu verifizieren. Die Ansicht zeigt dabei lediglich einen Quadranten, wobei aus der Illustration die wesentlichen Teile und die grundlegende Geometrie des Rotors 3 und des Stators 2 ablesbar sind. Wie bei einem erfindungsgemäßen Antriebsmotor 1 vorgesehen, weist der Stator 2 erkennbar eine Statorwicklung 4 auf, die in insgesamt 30 Nuten 9 des Stators 2 eingelegt ist und bei entsprechender Bestromung ein magnetisches Drehfeld erzeugt.

Bei einem erfindungsgemäßen Antriebsmotor 1 mit geeigneter Kombination aus Nuten und Polen des Rotors wird dieses Drehfeld den drehbar gelagerten Rotor 3 in Rotation versetzen, weil dieser eine Vielzahl an Permanentmagneten 5 (im Beispiel der Figur 1 sind es insgesamt 30 Magnete) trägt. Der Rotor 3 ist dabei als Innenläufer ausgestaltet, sodass ein Luftspalt mit radialer Ausdehnung LS zwischen dem Rotor 3 und dem Stator 2 besteht (Vgl. Fig. 1).

Die Darstellung der Figur 1, bei der eine technisch nicht sinnvolle Kombination von 30 Magneten mit 30 Nuten im Stator kombiniert ist, dient dabei lediglich der Illustration und Definition der Geometrie-Parameter, sodass auf Basis der Ansprüche und der allgemeinen Beschreibung erfindungsgemäße Ausgestaltungen einfach ableitbar sind. In technisch sinnvoller Weise kann bei einem erfindungsgemäß ausgestalteten Antriebsmotor 1 vielmehr ein Verhältnis von $N_N > PZ_R$ gewählt sein, wobei die sonstige Geometrie des in Figur 1 gezeigten Rotors 1 beibehalten werden kann.

In Figur 1 erkennt man auch die Innenumfangskreise IUK1, IUK2 und IUK3: Aufgrund der erfindungsgemäß äußerst filigran ausgestalteten Speichen 7 können die Permanentmagnete 5 sehr eng benachbart zueinander angeordnet werden, sodass die Permanentmagnete 5 im Bereich von IUK3 einen Anteil von mehr als 50% (Vgl. z.B. auch die Ausgestaltung gemäß Figur 2) und im Bereich von IUK1 und IUK2 einen Anteil von jeweils mehr als 82% der jeweiligen Umfangslänge des jeweiligen Innenumfangskreises belegen. Das Design ermöglicht so insbesondere eine hohe Polzahl $PZ_R$ des Rotors 3.

In der xy-Zeichenebene der Figur 1 ist auch eine Radialrichtung R illustriert, wobei man erkennt, dass sich die Permanentmagnete 5 überwiegend in dieser Richtung R erstrecken, weil sie in Radialrichtung länger sind als sie quer zu dieser Richtung R breit sind.

In Umfangsrichtung zwischen den Permanentmagneten 5 bildet der Rotor 3 jeweils Speichen 7 aus, die entlang der Radialrichtung R ausgerichtet sind. Diese Speichen 7 begrenzen Magnettaschen 8 zumindest teilweise: Während sich die Magnettaschen 8 von dem Innenumfangskreis IUK1 bis zu dem Innenumfangskreis IUK3 erstrecken, verlaufen die Speichen 7 von dem illustrierten weiteren Innenumfangskreis IUK2 bis zum Außenumfang des Rotors 3 (welcher einen Durchmesser von $D_R = 2R_R$ aufweist). Im Beispiel der Figur 1 sind zwar Permanentmagnete 5 in die Magnettaschen 8 eingesetzt, allerdings füllen diese Permanentmagnete 5 die Magnettaschen 8 nur teilweise aus, weil die quaderförmigen Permanentmagnete 5 nach radial innen nur bis zum Kreis IUK2 reichen, ab dem sich die Magnettaschen 8 dann nach radial innen hin verjüngen. Alle der gezeigten Permanentmagnete 5 des Rotors 3 sind dabei frei von seltenen Erden ausgestaltet.

In dem Beispiel der Figuren 2 und 3 ebenso wie im Beispiel der Figuren 4 bis 6 sowie in dem weiteren Beispiel der Figur 7 füllen die dort jeweils gezeigten Permanentmagnete 5 die jeweiligen Magnettaschen 8 hingegen vollständig aus (bis auf gewisse notwendige Montagespalte), sodass sich dort die Permanentmagnete 5 jeweils bis zum Innenumfangskreis IUK1 erstrecken und somit gilt: RLM = RLMT. In Figur 2 und 3 erkennt man auch, dass auch dort die Umfangsbreite M der Permanentmagnete 5 größer ausfällt als die Umfangsbreite S der jeweiligen Speiche 7 (jeweils gemessen in Höhe des Innenumfangskreises IUK3). In Figur 2 ist auch noch angedeutet, wo genau eine Verschraubung 29 des den Rotor 3 ausbildenden Pakets aus Rotorblechen 33 an jeder Speiche 7 sinnvoll platziert werden kann und anhand der gestrichelten Umfangslinie bis wohin ein wie zuvor beschriebenes Abschlussblech 30, welches benachbarte Speichenköpfe 25 überbrückt, reichen könnte.

Die jeweiligen Speichen 7 erstrecken sich hingegen in allen Beispielen lediglich bis zum Innenumfangskreis IUK2. Die Verbindung der jeweiligen Speiche 7 mit dem zentralen Bereich 11 des Rotors 3 wird dabei über jeweilige Verbindungsstege 15 hergestellt, die sich somit von IUK1 bis zu IUK2 erstrecken. Diese Verbindungsstege 15 begrenzen somit ebenfalls die jeweilige Magnettasche 8. In allen Beispielen sind die Permanentmagnete 5 dabei als Ferrit-Magnete ausgestaltet.

Gerade in Figur 1 erkennt man gut, dass die minimale Umfangsbreite b dieser Verbindungsstege 15 sehr schmal gewählt ist; diese kann weniger als 1,90 mm betragen.

Kennzeichnend für erfindungsgemäße Designs (wie in Figur 1 gezeigt) sind dabei die besonders filigran ausgestalteten Speichen 7: Betrachtet man beispielsweise den Winkelbereich $\alpha$, welchen die jeweilige Speiche 7 (bezogen auf den Mittelpunkt M des Rotors 3 und in Höhe des radial äußersten Innenumfangkreises IUK3, bis zu welchem die Permanentmagnete 5 reichen), unter Vernachlässigung der gezeigten Vorsprünge 31, einnimmt, so erkennt man, dass im Beispiel der Figur 1 der Winkel $\alpha$ weniger als 8° beträgt.

In Figur 1 kann man auch gut erkennen, dass jede der Speichen 7 jeweils zwei Längskanten 18 ausbildet, an welchen die Permanentmagnete 5 flächig anliegen. Diese Längskanten 18 verlaufen dabei jeweils schräg zur Radialrichtung R und führen dabei jeweils von dem Innenumfangskreis IUK2 nach radial außen weg, bis zum Kreis IUK3 und begrenzen einen Winkel $\beta$.

Bei dem Simulations-Beispiel der Figur 1 trägt der dortige Rotor 3 insgesamt 30 Magnete 5, woraus eine Polzahl $P_{ZR} = 30$ resultiert, während der Stator 2 insgesamt 30 Nuten aufweist. Der in Figur 6 gezeigte Rotor 3 weist hingegen eine Anzahl von insgesamt 24 Magneten 5 auf und bildet so eine Anzahl von $P_{ZR} = 24$ magnetischen Polen an seinem Außenumfang aus.

In Figur 1 kann man ferner auch das Verhältnis aus dem maximalen Außendurchmesser $D_R = 2R_R$ des Rotors 3 und dem maximalen Außendurchmesser $D_S$ des Stators 2 ablesen; dieses Verhältnis kann bei erfindungsgemäßen Antriebsmotoren 1 bei $D_R/D_S > 0,72$ liegen.

Wenn man in Figur 1 den jeweils radial äußersten Punkt des jeweiligen Permanentmagneten 5 betrachtet (der an den Kreis IUK3 stößt) und in diesem Bereich die Umfangslänge des jeweiligen Magneten 5 in der Umfangsrichtung als Magnetbreite M bestimmt, so stellt man fest, dass diese Magnetbreite M größer ausfällt als die in gleicher radialer Höhe und in gleicher Weise gemessene Speichenbreite S. Mit anderen Worten nehmen also am radial äußersten Punkt die Permanentmagnete 5 entlang des Umfangs mehr Länge ein als die dazwischen befindlichen Speichen 7. Eine solche Ausgestaltung wird durch die besonders schmale Ausgestaltung der Speichen ermöglicht, wie man insbesondere anhand des Winkels $\beta$ in Figur 1 erkennt: Dieser Winkelbereich $\beta$ ist derjenige, der von der Speiche 7 im Bereich ihrer Längskanten 18 eingenommen wird und beträgt im Beispiel der Figur 1 weniger als 14°.

Bei allen in den Figuren gezeigten Ausgestaltungsbeispielen zeigen die jeweiligen Permanentmagnete 5, bezogen auf die xy-Radialebene, einen Querschnitt, der durch ein Polygon beschrieben ist. Im Fall der Figur 1 sind alle Permanentmagnete 5 quaderförmig ausgebildet. Im Fall der Figuren 2 und 3 zeigen die dortigen Permanentmagnete 5 hingegen jeweils einen radial innenliegenden keilförmigen Bereich 20, der eine Trapezform aufweist und damit denjenigen Bereich der jeweiligen Magnettasche 8 optimal befüllt, welcher durch die beiden Verbindungsstege 15 begrenzt ist.

Im Fall der Figuren 4 bis 6 werden hingegen zwei unterschiedliche Geometrie-Typen A und B von Permanentmagneten 5 eingesetzt, wobei der Typ A ebenfalls wie im Beispiel der Figur 3 einen trapezförmigen Bereich 21 aufweist, wohingegen der Typ B quaderförmig und damit einfacher herstellbar ausgestaltet ist. Dennoch ist auch im Beispiel der Figuren 4 bis 6 die jeweilige Magnettasche 8 vollständig vom jeweiligen Permanentmagneten A oder B gefüllt, wobei die Magnettaschen 8 hierzu unterschiedliche Formgebungen aufweisen. Um ein vollständiges Ausfüllen der Magnettaschen 8 trotz Quaderform der Magnete vom Typ B zu ermöglichen sind im Beispiel der Figuren 4 bis 6 die Verbindungsstege 15, genauer deren mittlere Verlaufsrichtung 23, schräg zur Radialrichtung R ausgerichtet. In Figur 4 erkennt man dabei, dass sich die Verlaufsrichtungen 23 von benachbarten der Verbindungsstege 15 im zentralen Bereich 11 des Rotors 3 kreuzen.

Das Beispiel der Figur 7 zeigt, dass ein erfindungsgemäßer Antriebsmotor 1 mit vollständig gefüllten Magnettaschen 8 auch ohne jegliche Keilform der Permanentmagnete 5 realisiert werden kann, nämlich indem die Magnettaschen 8 zwei rechteckige Bereiche 19a und 19b von unterschiedlicher Größe umfassen, die in der Radialrichtung R aufeinanderfolgen. Der radial außenliegende rechteckige Bereich 19b der Magnettaschen 8 ist dabei durch die Längskanten 18 der Speichen 7 begrenzt, während der radial innen liegende rechteckige Bereich 19a durch die Verbindungsstege 15 begrenzt ist, welche die Speichen 7 mit dem zentralen Bereich 11 verbinden. Die Verbindungsstege 15 weisen daher in diesem Beispiel jeweils einen trapezförmigen Querschnitt in der xy-Ebene auf. Die beiden Typen von jeweils quaderförmig ausgestalteten Permanentmagneten A und B sind dabei im Beispiel der Figur 7 in Radialrichtung R hintereinander angeordnet und berühren sich jeweils mit ihren Stirnflächen. Die Magnete vom Typ B erstrecken sich dabei über die radiale Länge RLS der Verbindungsstege 15 ausgehend von IUK1 bis zu IUK2; die Magnete 5 vom Typ A erstrecken sich hingegen von IUK2 bis zu IUK3.

Bei dem Ausgestaltungsbeispiel der Figur 8 sind wie bereits im Beispiel der Figur 7 die beiden Magnettaschen 19a und 19b miteinander verbunden (diese gehen ineinander über) und es werten erneut zwei unterschiedliche Geometrie-Typen A und B an Permanentmagneten 5a und 5b die dadurch gebildete gemeinsame Magnettasche eingesetzt, wobei die beiden unterschiedlichen Magnete 5a und 5b erneut in der Radialrichtung R hintereinander angeordnet sind und dabei direkt (in der Radialrichtung R) aufeinander folgen und somit in unmittelbarem Kontakt zueinander stehen (in der Radialrichtung R). Im Unterschied zu Figur 7 weist der Typ B in Figur 8 nun jedoch (radial innenseitig) eine Keilform auf (man beachte die dünnen gestrichelten Hilfslinien, die bis ins Rotorzentrum verlaufen). Hierbei verlaufen die Außenkanten 32 der radial innen angeordneten Permanentmagnete 5a vom Typ B erkennbar entlang der Radialrichtung R. Dies hat vor allem den Vorteil, dass auf die Weise die Verbindungs-stege 15 (die sich zwischen IUK1 und IUK2 erstrecken und den zentralen Bereich 11 mit dem mittleren Bereich 12 des Rotors 3 verbinden) in der Umfangsrichtung eine konstante Breite aufweisen.

Bezogen auf die xy-Radialebene zeigen die Permanentmagnete 5a in Fig. 8 einen trapezförmigen Querschnitt; der Querschnitt der Magnete 5b ist hingegen rechteckig. Die Permanentmagnete 5b weisen also eine einfach herstellbare Rechteck-/Quaderform auf, analog zu dem Typ A in Figur 7. Wie bei allen in den Figuren gezeigten Ausgestaltungen bilden dabei die einzelnen (jeweils einteilig ausgestalteten) Rotorbleche 33 jeweils den gesamten Querschnitt des Rotors 3 in der xy-Radialebene (in welcher die Radialrichtung R liegt) aus.

Zusammenfassend wird ein optimiertes Speichen-Design für einen Rotor 3 eines elektrischen Antriebsmotors 1 vorgeschlagen, sodass insbesondere Permanentmagnete 5 auf Basis von Ferriten eingesetzt werden können. Das Rotor-Design zeichnet sich durch besonders filigran ausgestaltete Speichen 7 aus, die es ermöglichen, den magnetischen Fluss zu vergrößern und so insbesondere beim Anfahren des Motors 1 hohe Drehmomente zu erzeugen, wie es beim Einsatz des Antriebsmotors 1 als Hubmotor einer Aufzugsanlage benötigt wird (Vgl. Figur 1).


Bezugszeichenliste

| | |
|---|---|
| 1 | Antriebsmotor, insbesondere Hubmotor einer Aufzugsanlage |
| 2 | Stator |
| 3 | Rotor |
| 4 | Statorwicklung |
| 5 | Permanentmagnet |
| 6 | Rotationsachse |
| 7 | Speichen |
| 8 | Magnettaschen (= Aufnahmetaschen für 5) |
| 9 | Nuten (von 2) |
| 10 | Außenumfang (von 3) |
| 11 | zentraler Bereich (von 3) |
| 12 | mittlerer Bereich (von 3; umfasst in radialer Richtung 15 und Teil von 7) |
| 13 | äußerer Bereich (von 3; umfasst Teil von 7) |
| 14 | Umfangspolabschnitt (radial äußerer Teil von 3/7; bildet 13 aus) |
| 15 | Verbindungssteg (verbindet 7 mit 11/16) |
| 16 | Rotorjoch |
| 17 | Aufnahmeloch (von 3/11, zur Aufnahme einer Motorachse) |
| 18 | Längskanten (bzw. Längsflächen von 7) |
| 19 | rechteckiger Bereich (von 5) |
| 20 | keilförmiger Bereich (von 5) |
| 21 | trapezförmiger Bereich |
| 22 | radiale Länge (von 15) |
| 23 | Verlaufsrichtung (von 15) |
| 24 | Zahn (von 2) |
| 25 | Speichenkopf |
| 26 | Luftspalt (zwischen 25; Länge in Umfangsrichtung: g) |
| 27 | magnetischer Pol |
| 28 | Motorachse |
| 29 | (axiale) Verschraubung |
| 30 | Abschlussblech (begrenzt 5 in axialer Richtung) |
| 31 | Haltevorsprung (mit radial innen liegender Umfangslänge u) |
| 32 | Außenkante (von 5) |
| 33 | Rotorblech |

Geometrie- und Design-Parameter des Antriebsmotors

| | | |
|---|---|---|
| $N_N$ | Anzahl an Nuten des Stators 2 | |
| $PZ_R$ | Polzahl des Rotors 3 | |
| $N_{PM}$ | Anzahl der Permanentmagnete 5 des Rotors 3 | |
| $PZ_S$ | Polzahl des Stators 2 | |
| $R$ | Radialrichtung | |
| $\alpha$ | auf den Mittelpunkt M des Rotors 3 bezogener Winkelbereich, der von einer Speiche 7 (unter Vernachlässigung der Haltevorsprünge 31) eingenommen wird | |
| $\beta$ | Winkelbereich, der von der jeweiligen Speiche 7 im Bereich ihrer Längskanten 18 eingenommen wird | |
| $\gamma$ | auf den Mittelpunkt M des Rotors 3 bezogener Winkelbereich, der einem Permanentmagnet (5) an seinem radial äußersten Ende in der Radialebene eingenommen wird | |
| $\delta$ | auf den Mittelpunkt M des Rotors 3 bezogener Winkelbereich, der von einem Speichenkopf 25 einer Speiche 7 (unter Berücksichtigung der Haltevorsprünge 31) eingenommen wird; aufgrund der Haltevorsprünge 31 gilt: $\delta > \alpha$ | |
| $b$ | Breite der Verbindungsstege 15 in der Umfangsrichtung | |
| $d$ | Abstand in radialer Richtung zwischen Außenumfang des Rotors 3 und dem radial außen liegenden Ende des jeweiligen Permanentmagneten 5 (entspricht der radialen Höhe der Haltevorsprünge 31 bzw. der radialen Ausdehnung des äußeren Bereich 13 des Rotors 3) | |
| $g$ | Länge in Umfangsrichtung der Luftspalte, die zwischen | |
| $u$ | einzelnen Speichenköpfen 25 des Rotors 3 bestehen Umfangslänge eines der Haltevorsprünge 31 (gemessen an der radial innen liegenden Seite) | |
| $D_B$ | "Bohrungsdurchmesser" = Innendurchmesser des Stators 2 | |
| $D_R$ | Außendurchmesser des Rotors 3 | |
| $D_S$ | Außendurchmesser des Stators 2 | |
| $LS$ | radiale Länge des Luftspalt zwischen Rotor und Stator | |
| $M$ | Umfangsbreite eines Permanentmagneten 5, gemessen entlang des Umfangs an seinem radial außen liegenden Ende | |
| $RT$ | radiale Tiefe (gemessen vom Zentrum M des Rotors 3 aus), bis zu der die Magnettaschen 8 nach radial innen reichen | |
| $RLM$ | Länge über die sich die Permanentmagnete 5 in radialer Richtung erstrecken | |
| $RLMT$ | Länge über die sich die Magnettaschen 8 in radialer Richtung erstrecken | |
| $RLS$ | Länge über die sich die Verbindungsstege 15 in radialer Richtung erstrecken | |
| $S$ | Umfangsbreite einer Speiche 7, gemessen entlang des Umfangs an ihrem radial außen liegenden Ende | |
| $IUK2$ | Innenumfangskreis bis zu dem sich die Speichen 7 nach radial innen erstrecken | |
| $IUK1$ | Innenumfangskreis bis zu dem sich die Verbindungsstege 15, die die Speichen 7 mit dem zentralen Bereich 11 des Rotors 3 verbinden, ausgehend von IUK2 erstrecken | |
| $IUK3$ | radial äußerster Innenumfangskreis bis zu dem sich die die Permanentmagnete 7 erstrecken | |

**Patentansprüche**

**1. Antriebsmotor (1),**

- der als Hubmotor für eine Aufzugsanlage ausgestaltet ist, mit
- einem Stator (2), der eine Statorwicklung (4) zur Erzeugung eines magnetischen Drehfelds aufweist, die in Nuten (9) des Stators (2) eingelegt ist, und
- einem um eine Rotationsachse (6) drehbar gelagerten Rotor (3), der eine Vielzahl an Permanentmagneten (5) trägt und als Innenläufer ausgestaltet ist,
- wobei die Rotationsachse (6) eine Radialrichtung R in einer senkrecht zur Rotationsachse verlaufenden xy-Radialebene definiert,
- wobei sich die Permanentmagnete (5) überwiegend in der Radialrichtung R erstrecken und
- wobei der Rotor (3) entlang der Radialrichtung R verlaufende Speichen (7) ausbildet, die in Umfangsrichtung des Rotors (3) Magnettaschen (8) begrenzen, in welche die Permanentmagnete (5) eingesetzt sind,
**dadurch gekennzeichnet,**
- **dass** die Permanentmagnete (5) als Ferrit-Magnete ausgestaltet sind.

**2.** Antriebsmotor (1) nach Anspruch 1,

- wobei eine jeweilige Magnetbreite M der Permanentmagnete (5), jeweils gemessen in Umfangsrichtung als eine Umfangslänge am radial äußersten Punkt des jeweiligen Permanentmagneten (5), größer ausfällt als eine jeweilige Speichenbreite S, die ebenfalls in Umfangsrichtung als eine Umfangslänge in Höhe des radial äußersten Punkts des jeweiligen Permanentmagneten (5) gemessen wird, sodass gilt: M > S und/oder
- wobei ein Winkelbereich $\gamma$, der vom jeweiligen Permanentmagnet (5) an seinem radial äußersten Ende in der Radialebene eingenommen wird, größer ausfällt als ein Winkelbereich $\alpha$, der von einer benachbarten Speiche (7) in der Radialebene in derselben radialen Höhe eingenommen wird, jeweils bezogen auf das Zentrum des Rotors (3), sodass gilt: $\gamma > \alpha$.

**3.** Antriebsmotor (1) nach Anspruch 1 oder 2,

- wobei für ein Verhältnis zwischen einem maximalen Außendurchmesser $D_R$ des Rotors (3) und einem maximalen Außendurchmesser $D_S$ des Stators (2) gilt: $D_R/D_S > 0,70$, vorzugsweise gilt: $D_R/D_S > 0,75$, und/oder
- wobei die Speichen (7) in einem Radialbereich, in welchem die Permanentmagnete (5) angeordnet sind, jeweils bezogen auf einen Mittelpunkt M des Rotors (3), einen Winkelbereich $\alpha$ einnehmen und wobei gilt:

  $\alpha < 18°$, vorzugsweise $\alpha < 15°$, besonders bevorzugt
  $\alpha < 10°$ oder sogar $\alpha < 8°$
  oder
  $\alpha < 0,0125° \times PZ_R^2 - 0,925° \times PZ_R + 22,5°$, mit $PZ_R$ der Polzahl des Rotors (3).

**4.** Antriebsmotor (1) nach einem der vorangehenden Ansprüche,

- wobei jede der Speichen (7) jeweils zwei gerade Längskanten (18) als Anlageflächen für die Permanentmagnete (5) ausbildet, vorzugsweise wobei sich die Längskanten (18) entlang eines jeweiligen radial außen liegenden Bereichs (19) des jeweiligen Permanentmagneten (5) in der Radialebene erstrecken und/oder
- wobei sich die Speichen (7) bis zu einem Innenumfangskreis IUK2 mit Radius $R_{IUK2}$ erstrecken,

  - insbesondere wobei die Längskanten (18) von dem Innenumfangskreis IUK2 nach radial außen wegführen,

- wobei sich Verbindungsstege (15), die die Speichen (7) mit einem zentralen Bereich (11) des Rotors (3) verbinden, radial innenseitig bis zu einem Innenumfangskreis IUK1 mit Radius $R_{IUK1}$ erstrecken und
- wobei für eine Länge $RLS = R_{IUK2}-R_{IUK1}$ der Verbindungsstege (15) in Bezug auf eine radiale Ausdehnung RLM der Permanentmagnete (5) gilt: RLS < 0,16 RLM, vorzugsweise gilt: RLS < 0,14 RLM oder sogar RLS < 0,12 RLM.

**5.** Antriebsmotor (1) nach einem der vorangehenden Ansprüche, wobei für eine Anzahl $N_{PM}$ der Permanentmagnete (5) gilt: $N_{PM} \geq 20$, vorzugsweise gilt: $N_{PM} \geq 24$ oder sogar $N_{PM} \geq 28$ und/oder

- wobei gilt $PZ_R \leq 40$, $PZ_R \leq 36$ oder sogar $PZ_R \leq 32$, mit $PZ_R = N_{PM}$ der Polzahl des Rotors (3), und/oder
- wobei für eine Anzahl $N_N$ an Nuten (9) des Stators (2) gilt: $N_N \geq 24$, vorzugsweise gilt: $N_N \geq 28$ oder sogar $N_N \geq 32$ und/oder
- wobei für die Anzahl $N_N$ an Nuten (9) des Stators (2) gilt: $N_N \leq 72$, vorzugsweise gilt: $N_N \leq 54$.

**6.** Antriebsmotor (1) nach einem der vorangehenden Ansprüche,

- wobei die Ferrit-Magnete mit einer magnetischen Flussdichte von wenigstens 0.35 T ausgestaltet sind und/oder
- wobei ein jeweiliges radial außen liegendes Ende des jeweiligen Permanentmagneten (5) in der Radialrichtung R um einen Abstand d von einem Außenumfang (10) des Rotors (3) beabstandet ist.

**7.** Antriebsmotor (1) nach einem der vorangehenden Ansprüche,

- wobei sich die Permanentmagnete (5) jeweils in der Radialrichtung R über eine radiale Länge RLM erstrecken, für die im Verhältnis zum Radius $R_R$ des Rotors (3) gilt:

  $RLM \geq 41\% R_R$, vorzugsweise: $RLM \geq 42\% R_R$; und/oder
  $RLM \leq 49\% R_R$, vorzugsweise: $RLM \leq 48\% R_R$.

8. Antriebsmotor (1) nach einem der vorangehenden Ansprüche,

- wobei die Speichen (7) über Verbindungsstege (15) mit einem, vorzugsweise frei von Lufttaschen ausgestalteten, zentralen Bereich (11) des Rotors (3) verbunden sind,

- vorzugsweise wobei die Permanentmagnete (5) bis zu einem Innenumfangskreis IUK1 reichen, an welchem die Verbindungsstege (15) in den zentralen Bereich (11) des Rotors (3) übergehen und/oder
- vorzugsweise wobei die Verbindungsstege (15) an ihren dünnsten Stellen in Umfangsrichtung eine Umfangsbreite b von b < 1.80 mm aufweisen.

9. Antriebsmotor (1) nach einem der vorangehenden Ansprüche,

- wobei alle der vom Rotor (3) getragenen Permanentmagnete (5), bezogen auf die Radialebene, einen, zumindest abschnittsweise oder vollständig, polygonalen Querschnitt zeigen,
- vorzugsweise wobei wenigsten einige oder aber alle der vom Rotor (3) getragenen Permanentmagnete (5) einen radial innen liegenden keilförmigen Bereich (20), insbesondere einen trapezförmigen Bereich (21), aufweisen und/oder
- wobei alle der vom Rotor (3) getragenen Permanentmagnete (5) wenigstens einen rechteckigen Bereich (19) in der Radialebene aufweisen.

10. Antriebsmotor (1) nach einem der vorangehenden Ansprüche,

- wobei die Permanentmagnete (5) zwei unterschiedliche Geometrie-Typen A und B umfassen und/oder die Magnettaschen (8) unterschiedliche Formgebungen aufweisen,
- vorzugsweise wobei die zwei unterschiedlichen Geometrie-Typen A und B der Permanentmagnete (5)

- in Umfangsrichtung abwechselnd in die Magnettaschen (8) eingesetzt sind oder
- jeweils in einer Radialrichtung R hintereinander angeordnet sind,

- besonders bevorzugt wobei, jeweils bezogen auf die Radialebene,

- die Permanentmagnete (5) des Geometrie-Typs A eine rechteckige Querschnittsform und/oder
- die Permanentmagnete (5) des Geometrie-Typs B radial innenseitig eine Keilform, insbesondere einen trapezförmigen Bereich, aufweisen.

11. Antriebsmotor (1) nach einem der vorangehenden Ansprüche,

- wobei die Magnettaschen (8) bis in eine radiale Tiefe RT geführt sind, die vom Zentrum M des Rotors (3) aus gemessen wird und für die im Vergleich zum Radius $R_R$ des Rotors (3) gilt: 0,45 $R_R$ < RT < 0,55 $R_R$ und/oder
- wobei die Speichen (7) des Rotors (3) über Verbindungsstege (15) mit dem zentralen Bereich (11) des Rotors (3) verbunden sind und wobei eine jeweilige mittlere Verlaufsrichtung (23) von einzelnen oder von allen dieser Verbindungsstege (15) jeweils schräg zur Radialrichtung R ausgerichtet ist, insbesondere in einem Winkel von > 5° zur Radialrichtung R, insbesondere wobei sich die Verlaufsrichtungen (23) von benachbarten der Verbindungsstege (15), vorzugsweise in einem/dem zentralen Bereich (11) des Rotors (3), kreuzen.

12. Antriebsmotor (1) nach einem der vorangehenden Ansprüche,

- wobei einzelne oder aber alle der Magnettaschen (8), bezogen auf die Radialebene, einen Querschnitt zeigen, der zwei rechteckige Bereiche (19a, 19b) unterschiedlicher Größe umfasst,
- insbesondere wobei ein radial außen liegender der zwei rechteckigen Bereiche (19b) an Längskanten (18) der Speichen (7) anliegt, während ein radial innen liegender der zwei rechteckigen Bereiche (19a) an Verbindungsstegen (15) des Rotors (3) anliegt, die die Speichen (7) mit einem zentralen Bereich (11) des Rotors (3) verbinden, und/oder
- wobei jeweils zwei unterschiedliche Geometrie-Typen A und B der Permanentmagnete (5),

- insbesondere zwei unterschiedliche quaderförmige Permanentmagnete (5a, 5b), in der Radialrichtung R hintereinander in der jeweiligen Magnettasche (8a, 8b) angeordnet sind,
- vorzugsweise wobei ein Typ B an Permanentmagneten (5a), welcher im Rotor (3) radial innen angeordnet ist, radial innenseitig eine Keilform aufweist, besonders bevorzugt wobei Außenkanten (32) dieses Typs B entlang der Radialrichtung R verlaufen.

13. Antriebsmotor (1) nach einem der vorangehenden Ansprüche,

- wobei in radialer Höhe eines radial äußersten Innenumfangskreis IUK3, bis zu dem sich die Permanentmagnete (5) erstrecken, die Permanentmagnete (5) insgesamt wenigstens 50%, vorzugsweise wenigstens 51%, einer Umfangslänge von IUK3 belegen und/oder
- wobei in radialer Höhe eines Innenumfangskreises IUK1 an welchem Verbindungstege (15), die die Speichen (7) mit dem zentralen Bereich (11) des Rotors (3) verbinden, in den zentralen Bereich (11) übergehen, die Permanentmagnete (5) insgesamt wenigstens 84%, vorzugsweise wenigstens 86% einer Umfangslänge von IUK1 belegen und/oder
- wobei in radialer Höhe eines Innenumfangskreises IUK2, an welchem die Verbindungsstege (15) in die Speichen (7) übergehen, die Permanentmagnete (5) insgesamt wenigstens 85%, vorzugsweise wenigstens 87%, einer Umfangslänge von IUK2 belegen.

14. Antriebsmotor (1) nach einem der vorangehenden Ansprüche, wobei einzelne, vorzugsweise jedoch alle, der vom Rotor (3) getragenen Permanentmagnete (5) in axialer Richtung der Rotationsachse (6) über den Stator (2) und/oder über den Rotor (3) überstehen,

- vorzugsweise wobei dieser axiale Überstand beidseitig ausgestaltet ist und an beiden Seiten des Stators (2) jeweils wenigstens 5 mm beträgt,
- insbesondere wobei der Rotor (3) nicht oder höchstens um 10% einer axialen Länge des Stators (2) über den Stator (2) jeweils auf beiden Seiten übersteht.

15. Antriebsmotor (1) nach einem der vorangehenden Ansprüche,

- wobei für einen Rotoraußendurchmesser $D_R$ des Rotors (3) gilt: $D_R$ = [130 - 180] mm und/oder
- wobei für die Polzahl $PZ_R$ des Rotors (3) gilt:

$8 \leq PZ_R \leq 14$, vorzugsweise wobei ferner für die Anzahl $N_N$ an Nuten (9) des Stators (2) gilt $9 \leq N_N \leq 15$, oder
$PZ_R \leq 36$, vorzugsweise wobei ferner gilt $N_N \leq 48$, oder
$PZ_R \leq 32$, vorzugsweise wobei ferner gilt $N_N \leq 40$.

**Fig. 1**

**Fig. 2**

**Fig. 3**

**Fig. 4**

**Fig. 5**

Fig. 6

Fig. 7

**Fig. 8**